# EUROPÄISCHE PATENTSCHRIFT

(11) **EP 0 711 208 B1**
(45) Veröffentlichungstag und Bekanntmachung des Hinweises auf die Patenterteilung: **25.03.1998**
(21) Anmeldenummer: 94921582.6
(22) Anmeldetag: 22.07.1994
(51) Int. Cl.: B05C 5/02, B05D 1/26

(54) **AUFTRAGSEINHEIT FÜR LEIM**
GLUE APPLICATOR UNIT
UNITE D'APPLICATION DE COLLE

(30) Priorität: 27.07.1993 DE 4325143
(43) Veröffentlichungstag der Anmeldung: 15.05.1996
(73) Patentinhaber: ITW Industrie GmbH, 40822 Mettmann (DE)
(72) Erfinder: WÜRTH, Heiko, D-61440 Oberursel/Ts. (DE)
(74) Vertreter: Palgen, Peter, Dr. Dipl.-Phys.
(86) Internationale Anmeldenummer: DE9400847
(87) Internationale Veröffentlichungsnummer: WO9503894

(56) Entgegenhaltungen:
- WO-A-89/04728
- WO-A-90/00852
- WO-A-91/12921
- DE-C- 3 637 631

## Beschreibung

Die Erfindung bezieht sich auf eine Auftragseinheit der dem Oberbegriff des Anspruchs 1 entsprechenden Art. Eine solche Auftragseinheit ist aus DE-C-1 652 298 bekannt.

Derartige Auftragseinheiten werden hauptsächlich zur Aufbringung von Leim oder dgl. auf flaches Beleimungsgut wie Zuschnitte oder Bahnen aus Karton, Papier, Textil, Vlies und dergleichen nach einem vorbestimmten Muster verwendet. Der Ausdruck "Leim oder dgl." schließt jedoch nicht nur andere Klebemittel wie Klebstoffe oder Heißschmelz-Kleber ein, sondern bedeutet auch, daß sich die Erfindung auf jegliche Auftragsmedien erstreckt, die von der Konsistenz und dem physikalischen Verhalten her zur Aufbringung mit der Auftragseinheit geeignete Eigenschaften aufweisen. Als Auftragsmedium kommen daher außer dem Leim ganz allgemein fluide Medien, insbesondere z.B. auch Schmiermittel und Lacke sowie ggf. auch Gase in Betracht.

Beleimungsgut wird vielfach an feststehenden Auftragseinheiten in einer Bahn vorbeigeführt. Es kann aber auch das Beleimungsgut feststehen und die Auftragseinheit bewegt werden. Auch Leimauftragsanlagen mit kombinierter Bewegung von Auftragseinheit und Beleimungsgut kommen in Betracht.

Bei der Relativbewegung entsteht auf dem Beleimungsgut eine Leimspur, die, wenn die Austrittsdüse einen feinen dauernden Leimstrahl erzeugt, linienförmig ausgebildet ist. Der Verlauf der Linie auf dem Substrat hängt von der Relativbewegung ab. In der Praxis werden meist mit Hilfe mehrerer Auftragseinheiten mehrere Linien nebeneinandergelegt, so daß eine quasi-flächige Verleimung möglich ist, wie sie in Verpackungsmaschinen häufiger angewendet wird. Seit einiger Zeit wird auch mit Auftragseinrichtungen gearbeitet, bei denen die Leimspuren nicht geradlinig verlaufen, sondern der Leimfaden durch Beaufschlagung mit geeignet gerichteten Luftstrahlen eine Drehbewegung erhält, so daß die Leimspur auf dem vorbeibewegten Substrat eine kringelförmige, sogenannte spiralige Gestalt aufweist, was wegen der mehr flächigen Verteilung des Leims in manchen Fällen bevorzugt wird (EP 225 624 B1; US-A-4 785 996).

Wenn eine Leimspur, wie immer sie im einzelnen aussehen mag, aufhören soll, wird der Austritt von Leim aus der Auftragseinheit durch Schließen des Leimaustrittsventils unterbrochen. Durch entsprechend rasch aufeinanderfolgendes Öffnen und Schließen des Leimaustrittsventils können kürzere Leimspuren für Leimaufträge auf kleine Felder wie Klebelaschen bei Kartonagen und dergleichen bis hin zu einzelnen Leimpunkten erzielt werden, die bei der Herstellung zu Windeln und Damenbinden benötigt werden.

Ein derartiger zeitlich unterbrochener Leimauftrag erfordert vielfach das Arbeiten des Leiinaustrittsventils mit hoher Frequenz. Bei der ständig steigenden Arbeitsgeschwindigkeit moderner Verpackungs- oder Verpackungsherstellungsmaschinen sowie Maschinen für die Herstellung von Hygieneartikeln kommen viele bekannte Auftragseinheiten an ihre Frequenzgrenzen.

Diese bekannten Auftragseinheiten sind elektromagnetisch oder pneumatisch betätigt, d.h. das zu dem Leimaustrittsventil gehörende Ventilglied bildet den Anker eines Elektromagneten oder ist mit einem solchen Anker verbunden, bzw. es ist das Ventilglied mit dem Kolben einer pneumatischen Kolben/Zylindereinheit verbunden. Elektromagnetische Ventile sind seit langem bekannt, wie zum Beispiel die US-A-1 5O4 773 erkennen läßt. Der Einsatz speziell für eine Auftragseinheit für Leim geht aus der im übrigen dem Oberbegriff zugrundeliegenden DE 16 52 298 C3 hervor. Ein pneumatisch betätigter Auftragskopf für Leim ergibt sich aus der DE 32 OO 469 C2.

Bei den praktisch realisierbaren Elektromagneten und pneumatischen Kolben/Zylindereinheiten als Antrieben für das Ventilglied ergeben sich schon aus Trägheitsgründen Grenzen für die Frequenz des Ventilhubs. Zusätzliche Schwierigkeiten sind beim Auftrag von Heißschmelz-Klebern zu bewältigen, bei denen die Ventilanordnung bei den erhöhten Temperaturen des geschmolzenen Klebers arbeiten muß.

Der Erfindung liegt die Aufgabe zugrunde, bei einer gattungsgemäßen Auftragseinheit die mögliche Frequenz des Ventilhubs in betriebssicherer Weise zu erhöhen. Dabei soll die Auftragseinheit zum Aufbringen von Auftragsmedien bei erhöhter Temperatur während des Aufbringens geeignet sein.

Diese Aufgabe wird durch die in Anspruch 1 wiedergegebene Erfindung gelöst.

Der elektrisch betätigte Antrieb erfolgt also mittels eines piezoelektrischen Elements, dessen maximale Hubfrequenz wesentlich höher liegt als diejenige eines Elektromagneten oder gar einer pneumatischen Kolben/Zylindereinheit. Dabei vermag das piezoelektrische Element beim Anlegen einer Spannung und dem dabei eintretenden Hub erhebliche Druckkräfte auszuüben, was die Verlagerung des Ventilgliedes mit hoher Beschleunigung und gegen hohe Rückstellkräfte ermöglicht. Für das Öffnen und Schließen des Ventils werden also nur kurze Zeiten benötigt, wodurch hohe Taktfrequenzen und z.B. ein fast punktförmiger Auftrag des Mediums auch noch bei erheblichen Fördergeschwindigkeiten des Substrats erreichbar sind. Auch eine kontrollierte Abgabe kleiner Mengen hochfluider Auftragsmedien - wie z.B. Gasen - kann mit Hilfe der erfindungsgemäßen Auftragseinheit bewerkstelligt werden.

Die Anwendung piezoelektrischer Elemente bei der Flüssigkeitssteuerung ist unter anderem aus dem Bereich der Tintenstrahldrucker bekannt. Hierbei besteht aber die Funktion des piezoelektrischen Elementes nicht im Öffnen eines Ventils, sondern es wird ein kleiner Tintentropfen durch das piezoelektrische Element direkt beschleunigt und ausgestoßen. Das piezoeleketrische Element bewegt dabei also die Flüssigkeit. Bei der Erfindung hingegen erfolgt die Bewegung des Leims unter der Wirkung des auf ihm lastenden Drucks, der in der Praxis Werte von einigen 1o Bar besitzt. Das piezoelektrische Element wird hierbei lediglich zum Öffnung und Schließen eines Durchgangs für den Leim. Es sind aber auch schon zum Betätigen von Ventilen piezoelektrische Aktuatoren eingesetzt worden. So zeigen die DE 17 51 543 A1 ein piezoelektrisch betätigtes Einspritzventil für Verbrennungsmotoren, das FR-U-24 98 285 ein piezoelektrisch betätigtes schnelles hydraulisches Verteilerventil.

Die Ausdehnung eines piezoelektrischen Elements zeigt außer der für die Betätigungszwecke ausgenutzten Spannungsabhängigkeit auch eine Temperaturabhängigkeit, die die Betätigung stören kann. Es ist daher auch bereits versucht worden, einem piezoelektrischen Element durch einen Schichtaufbau aus einzelnen piezoelektrischen Scheiben eine Unempfindlichkeit gegen Temperatureinflüsse zu verleihen (DE 34 22 935 B1). Diese Maßnahme vermag jedoch nicht voll zu befriedigen, insbesondere bei ungleichmäßiger Temperaturverteilung.

Es ist daher ein weiteres wichtiges Merkmal die erfindungsgemäße Trennung des Gehäuses in einen Leimführungsteil und einen das piezoelektrische Element aufnehmenden Antriebsteil, wobei die Gehäuseteile gegeneinander wärmeisoliert sind. Dadurch wird die Verarbeitung von Auftragsmedien bei erhöhten Temperaturen ermöglicht, z.B. von Heißschmelzkleber, der in schmelzflüssigem Zustand aufgebracht wird und so den ggf. noch beheizten Leimführungsteil passiert. Durch die Wärmeisolierung kann eine Wärmeübertragung aus dem Leimführungsteil in den Antriebsteil mit dem piezoelektrischen Element wesentlich vermindert werden, so daß es gar nicht erst zu bedeutenden Temperaturerhöhungen desselben kommt und auch unabhängig von etwaigen Eigenschaften des piezoelektrischen Elements die Gefahr von Störungen der Betätigung weiter vermindert ist. Es ist hierdurch möglich, Auftragsmedien in betriebssicherer Weise zu verarbeiten, die beim Aufbringen eine Temperatur von teilweise über 13O° C erfordern, ohne daß dabei die temperaturempfindlichen piezoelektrischen Elemente Probleme bereiten.

In baulicher Hinsicht kann die Wärmeisolation in der in Anspruch 2 wiedergegebenen Weise verwirklicht werden.

Eine wichtige Ausgestaltung ist Gegenstand des Anspruchs 3.

Da die Antriebsbewegung des piezoelektrischen Elements aus dem Antriebsteil heraus in den Leimführungsteil zur Bewegung des Ventilgliedes übertragen wird, ist es für dessen einwandfreie Funktion notwendig, daß der Abstand der beiden Teile ineinander unter allen Betriebsbedingungenau fixiert ist. Aus diesem Grund sind die keramischen Abstandsstücke vorgesehen, die sich bei Temperaturänderungen nicht wesentlich ausdehnen und insbesondere eine erhebliche Gestaltfestigkeit aufweisen. Dadurch ist ein unveränderlicher Abstand der beiden Teile des Gehäuses garantiert.

Die Ansprüche 4 und 5 geben konkrete Ausgestaltungen der Abstandsstücke an, wobei die Anordnung nach Fig. 5 zum Ausdruck bringt, daß die keramischen Ringscheiben als Abstandsstücke an der Stelle der Einleitung der Verbindungskräfte der beiden Gehäuseteile vorgesehen ist und also keine Biegekräfte auf die Gehäuseteile ausgeübt werden.

Die Wärmeisolation kann sich aus mehreren Komponenten zusammensetzen und gemäß Anspruch 6 ein plattenförmiges Wärmeisolationselement umfassen, welches, da die Abstandhaltung von den keramischen Ringscheiben übernommen wird, auch aus einem geeigneten weichen Material, z.B. einem keramischen Fasermaterial bestehen kann.

Dieses Material kann gemäß Anspruch 7 auch mit einem verbleibenden wärmeisolierenden Luftschicht zusammenwirken.

Ein plattenförmiges Wärmeisolationselement, welches nicht den ganzen Abstandsraum zwischen den beiden Gehäuseteilen ausfüllt, kann in der in Anspruch 8 wiedergegebenen Weise festgelegt werden.

Anspruch gibt eine Möglichkeit zur Steigerung der Wärmedämmung des plattenförmigen Wärmeisolationselements an.

Bei der bevorzugten Ausführungsform der Erfindung gemäß Anspruch 10 erfolgt der erfindungsgemäße Einsatz des piezoelektrischen Elements so, daß der Arbeitshub des Ventils durch die Ausdehnung des piezoelektrischen Elements, also durch die Ausübung einer Druckkraft durch dasselbe, gesteuert wird. Bei Ausübung dieser Druckkraft wird das Ventilglied aus der Anlage an seinem Ventilsitz herausgedrückt. Bei Wegnahme des elektromagnetischen Feldes führen die separaten Schließmittel das Ventilglied wieder in die Anlage zurück und schließen dadurch den Ventildurchgang.

Die bauliche Ausbildung des Ventils ist bei dem bevorzugten Ausführungsbeispiel gemäß den Ansprüchen 11 bis 13 getroffen, wobei die unmittelbare Anlage des piezoelektrischen Elements am Ende des Ventilglieds gemäß Anspruch 14 der direkten Kraftübertragung und der Vermeidung unnötiger trägheitserzeugender Masse an den bewegten Teilen dient.

Um das piezoelektrische Element mit einer gewissen Vorspannung, aber dennoch frei ausdehnungsfähig in der Kammer festzulegen, ist die Federanordnung nach Anspruch 15 vorteilhaft.

Die piezoelektrischen Elemente unterliegen einer nicht unerheblichen thermischen Ausdehnung, die die Steuerfunktion bei der Anwendung auf ein Ventil der erfindungsgemäßen Art stören kann. Um dies zu vermeiden, empfiehlt es sich gemäß Anspruch 16, daß geeignete, im Stand der Technik vorhandene Mittel zur Temperaturkompensation - zusätzlich zu der Wärmeisolierung zwischen Antriebsteil und Leimführungsteil - vorgesehen sind, die z.B. nach dem Prinzip des Anspruchs 17 funktionieren können. Zu den Wärmeisolierungsmaßnahmen gehört auch die Isolierung im Bereich des Querschnitts des piezoelektrischen Elements nach Anspruch 18.

Eine in der Praxis wichtige Ausgestaltung der Erfindung ist Gegenstand des Anspruchs 19. Die Steuerung kann so erfolgen, daß die Spannung gegen den Schluß des Ausdehnungshubes nicht zu rasch abfällt, so daß das Ventilglied weich auf den Ventilsitz aufsetzt, wodurch die Ventilteile geschont und der Verschleiß verringert werden.

Durch die Teilung des Gehäuses in einen Leimführungsteil und einen Antriebsteil kann der Leimführungsteil nach Anspruch 20 beheizt werden, was insbesondere dann notwendig sein kann, wenn unter erhöhter Temperatur zu verarbeitender Leim oder dgl. für eine längere Zeit in der Auftragseinheit verweilt, wo er ohne Beheizung abkühlen und eine den Auftrag verändernde Viskosität annehmen würde.

In der bevorzugten Ausführungsform gemäß Anspruch 22 üben die Schließmittel auf das Verstellglied eine elastische Kraft aus, was im einzelnen in der in den Ansprüchen 23 bis 27 wiedergegebenen Weise realisiert werden kann.

Eine gerade im Hinblick auf die erfindungsgemäße Auftragseinheit wichtige Eigenschaft der piezoelektrischen Elemente ist ihr im Verhältnis zu der ausübbaren Druckkraft geringer Platzbedarf quer zur Hubrichtung. In vielen Anwendungsfällen geht es um die Erzeugung von Beleimungsmustern aus parallel nebeneinanderliegenden Linien, und es hängt natürlich die Feinheit eines solchen Beleimungsmusters, d.h. der Querabstand der Linien, von der Breite der nebeneinander anzuordnenden Auftragseinheiten ab. Elektromagnetisch gesteuerte Auftragseinheiten sind insoweit durch die Ausladung der Spule des Elektromagneten sehr beschränkt, wie die Zeichnungen der US 15 O4 773 und der DE 16 52 298 C3 sinnfällig werden lassen. Bei pneumatisch gesteuerten Auftragseinheiten lag die bei äußerster Raumökonomie erreichbare untere Grenze der Breite der einzelnen Auftragseinheit bisher bei etwa 2O mm.

Der Antrieb mittels eines piezoelektrischen Elements baut schmäler, so daß eine Ausbildung der Auftragseinheit nach Anspruch 28 möglich wird. Es können also jetzt sehr schmale unabhängig voneinander steuerbare Auftragseinheiten dicht nebeneinandergesetzt werden, die ein Beleimungsbild mit entsprechend eng benachbarten Linien ermöglichen. Es sind also bei der erfindungsgemäßen Auftragseinheit die Vorteile hoher Arbeitsfrequenz bei hoher Auftragstemperautr mit geringer Baubreite gepaart.

In der Zeichnung ist ein Ausführungsbeispiel der Erfindung dargestellt.
Fig. 1 zeigt einen Vertikalschnitt durch eine Auftragseinheit;
Fig. 2 zeigt eine Ansicht gemäß Fig. 1 von links;
Fig. 3 zeigt einen Ausschnitt aus Fig. 1 aus dem Bereich der Austrittsdüse in vergrößertem Maßstab.

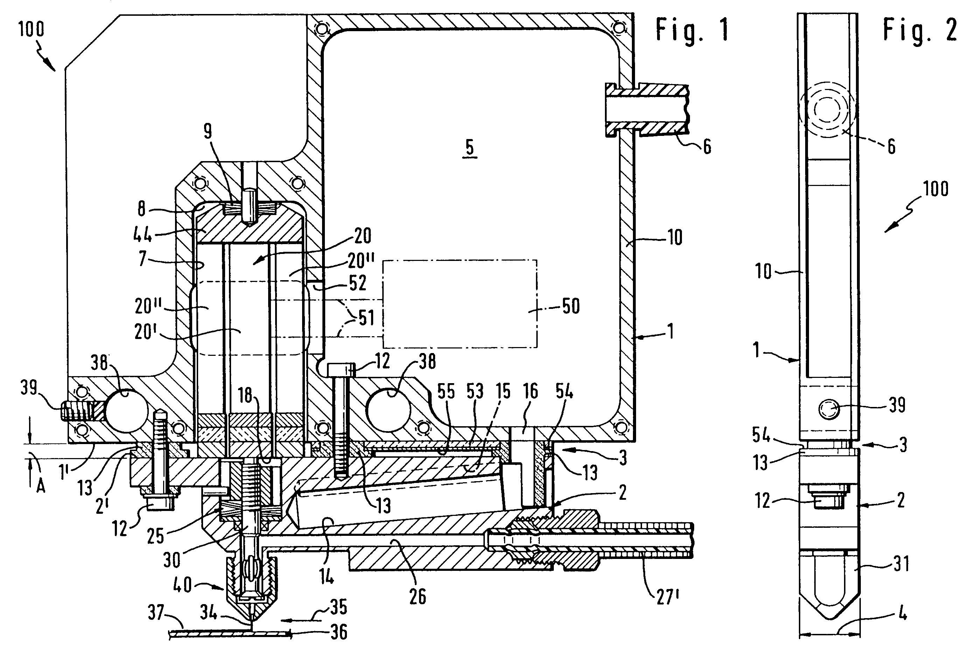

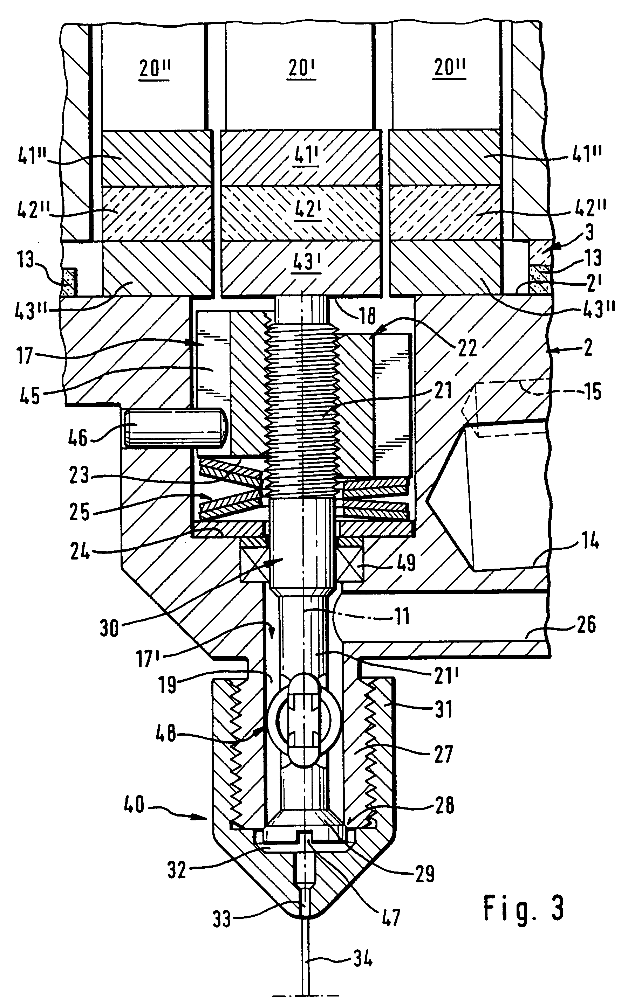

Die in den Fig. 1 und 2 als Ganzes mit 1OO bezeichnete Auftragseinheit umfaßt ein aus Metall, z.B. Aluminium, bestehendes Gehäuse 1O, welches aus einem in der in der Zeichnung dargestellten bevorzugten Betriebsstellung oberen Antriebsteil 1 und einem in der Betriebsstellung unteren Leimführungsteil 2 besteht, die durch eine dazwischen angeordnete im wesentlich ebene Wärmeisolationszone 3 von einer Dicke A (Fig. 1) thermisch voneinander getrennt sind. Der Antriebsteil 1 des Gehäuses 1O ist in der in Fig. 1 wiedergegebenen Seitenansicht etwa rechteckig ausgebildet und bildet mit dem Leimführungsteil 2 ein plattenförmiges Gebilde von einer einheitlichen Dicke 4 (Fig. 3), die in dem Ausführungsbeispiel etwa 12 mm beträgt.

Die gemäß Fig. 1 rechte Hälfte des Antriebsteils 1 bildet einem Raum 5 zur Aufnahme von elektrischen Schaltungsteilen, die über eine nicht dargestellte, durch die Tülle 6 herangeführte Leitung versorgt werden. Gemäß Fig. 1 links von dem Raum 5 ist eine Kammer 7 gebildet, die zur Aufnahme eines als Ganzes mit 2O bezeichneten piezoelektrischen Elements dient, welches aus einem mittleren Teilelement 2O' und zwei zu dessen beiden Seiten angeordneten untereinander und zu dem Teilelement 20 gleichlangen Teilelementen 2O'' besteht, deren Ausdehnungsrichtungen einander parallel sind. Die äußeren Teilelemente 2O'' sind jeweils über eine Druckplatte 41'', eine Wärmeisolierplatte 42'' und eine Anlageplatte 43'' auf der Oberseite 2' des Leimführungsteils 2 gehäusefest abgestützt. Sie ragen von unten in die Kammer 7 und sind oben an einem gemeinsamen Joch 44 befestigt, welches gegen das obere Ende 8 der Kammer 7 über ein Tellerfederpaket 9 abgestützt ist, welches dem ansonsten in der Kammer 7 in Richtung der vertikalen Achse 11 nicht festgelegten piezoelektrischen Element 2O eine Vorspannung gemäß Fig. 1 nach unten erteilt und insbesondere einen durch die thermische Ausdehnung der Teilelemente 2O'' bedingten Hub des Jochs 44 zuläßt. Das mittlere Teilelement 2O' ist mit seinem oberen Ende an dem Joch 44 befestigt und endet unten in der gleichen Höhe wie die Teilelemente 2O''. Bei einer Temperaturerhöhung und der entsprechenden Ausdehnung, die die Teilelemente 2O',2O'' gleich erfahren, wird das Joch 44 um einen Betrag angehoben und nimmt dabei das obere Ende des Teilelements 2O' mit. Das Teilelement 20' verlängert sich aber um den gleichen Betrag nach unten, so daß sein unteres Ende auf der gleichen Höhe wie die unteren Enden der Teilelemente 2O'' bleibt, und zwar unabhängig von der Temperaturkurve der Dehnung. Auch am unteren Ende des Teilelements 2O' sind eine Druckplatte 41', eine Wärmeisolierrungsplatte 42' und eine Anlageplatte 43' angeordnet, die von den entsprechenden Platten 41'',42'',43'' getrennt in der gemäß Fig. 1 vertikalen Hubrichtung beweglich sind. Die an der Unterseite der Anlageplatte 43' gebildete Arbeitsfläche 18 vollführt also beim Anlegen einer Spannung an das Teilelement 2O' einen Arbeitshub, der nur von der angelegten Spannung, nicht aber von der Umgebungstemperatur abhängig ist. Nur die spannungsbedingte Dehnung des Teilelements 2O' tritt also an der Arbeitsfläche 18 des piezoelektrischen Elements 2O nach außen hin in Erscheinung.

Der Leimführungsteil 2 ist mittels Schrauben 12 an der Unterseite 13 des Antriebsteils 1 befestigt. Die Schrauben 12 sind von keramischen wärmeisolierenden Ringscheiben 13 umgeben, die als Abstandsstücke dienen und die Unterseite 1' des Antriebsteils 1 und die Oberseite 2' des Leimführungsteils 2 in einem Abstand A halten, der als unter allen Betriebsbedingungen weitgehend unverändert bleibt, so daß keine Beeinflussung des durch das piezoelektrische Element 20 ausgeübten Hubs eintritt. Die Ringscheiben 13 verhindern einen direkten metallischen wärmeleitenden Kontakt der Teile 1 und 2.

Der Leimführungsteil 2 ist durch einen Metallblock von der Dicke 4 gebildet, in welchem Bohrungen 14 zur Aufnahme eines nicht dargestellten Heizelements und 15 zur Aufnahme eines ebenfalls nicht dargestellten Temperaturfühlers ausgebildet sind, die sich über einen wesentlichen Teil der horizontalen Länge des Leimführungsteils 2 erstrecken. In diesem Bereich ist zusätzlich zu den Zwischenlagen 13 ein von diesen auf stufenförmigen Absätzen 54 gehaltenes plattenförmiges Wärmeisolationselement 53 vorgesehen, welches die größte Hitze des Heizelements in der Bohrung 14 von dem Antriebsteil 1 fernhält. Das plattenförmige Wärmeisolationselement 53 hat eine geringere Dicke als dem Abstand A entspricht. Es liegt nur gegen die Unterseite 1' an und beläßt gegen die Oberseite 2' einen Luftabstand. Auf dieser Seite trägt das plattenförmige Wärmeisolationselement 53 eine wärmereflektierende metallische Schicht 55. Die Verbindung des Heizelements und des Temperaturfühlers mit den in dem Raum 5 angeordneten Schaltungsteilen wird über einen Durchlaß 16 hergestellt, an welchem ebenfalls eine keramische Ringscheibe 13 als Abstandsstück vorgesehen ist.

Die Gesamtheit dieser Maßnahmen, also die Ringscheiben 13, das Wärmeisolationselement 53 einerseits und die Wärmeisolationsplatte 42',42'' andererseits, wirken zu einer wirksamen, die mechanische Funktion des piezoelektrischen Antriebs nicht beeinträchtigenden Wärmeabschottung des piezoelektrischen Elements 20 zusammen.

In dem gemäß Fig. 1 linken Bereich des Leimführungsteils 2 ist eine zu der Achse 11 koaxiale Ventilkammer 17 ausgebildet (Fig. 3), in der ein zu der Achse 11 koaxiales, rotationssymmetrisches als Ganzes mit 3O bezeichnetes Ventilglied parallel zur Achse 11 beweglich ist. Das Ventilglied 3O liegt mit seinem oberen Ende unmittelbar gegen die den Arbeitshub ausführende Arbeitsfläche 18 des piezoelektrischen Elements 2O an.

Das Ventilglied 3O umfaßt eine Spindel 21, von der ein Führungsteil 22 im oberen Bereich der Spindel 21 radial auslädt und an der Wandung der Ventilkammer 17 axial beweglich geführt ist. Ein in einen achsparallelen Umfangsschlitz des Führungsteils 22 eingreifender radialer Zapfen 46 in der Wandung der Ventilkammer 17 verhindert eine Drehung des Führungsteils 22 in der Ventilkammer 17. Das Führungsteil 22 ist über ein Gewinde auf der Spindel 21 festgelegt und kann durch Drehen der Spindel 21 längs derselben verstellt werden.

Zwischen der einen senkrecht zur Achse 11 verlaufenden Absatz bildenden Unterseite 23 des Führungsteils 22 und dem Boden 24 der Ventilkammer 17 ist ein Tellerfederpaket 25 angeordnet, welches das Ventilglied 3O nach oben gegen die Arbeitsfläche 18 des piezoelektrischen Elements 2O drückt. Links von der Achse 11 ist das Tellerfederpaket 25 ausgedehnt bei angehobenem Ventilglied 3O, rechts von der Achse 11 zusammengedrückt bei abgesenktem Ventilglied dargestellt.

Gemäß den Fig. 1 und 3 ist in dem Leimführungsteil 2 ein horizontaler Zuführkanal 26 für den Leim vorgesehen, der über eine beheizte Schlauchleitung 27 von einer nicht dargestellten Schmelzvorrichtung herangeführt wird. Der Zuführkanal 26 führt seitlich in einen unteren, engeren Teil 17' der Ventilkammer 17, der koaxial von dem unteren Teil 21' der Spindel 21 durchsetzt wird. Der Leimdurchtritt nach oben ist durch eine an der Spindel 21 anliegende Dichtung 49 unterbunden. Der Durchmesser des unteren Teils 21' der Spindel ist geringer als der des unteren Teils 17' der Kammer 17, so daß ein im Querschnitt ringförmiger Zwischenraum 19 verbleibt, durch den der unter Druck stehende Leim gegen das am unteren Ende des unteren Teils 17' der Ventilkammer 17 ausgebildete, als Ganzes mit 4O bezeichnete Leimaustrittsventil strömen kann. Der untere Teil 17' der Ventilkammer 17 verläuft in einem buchsenartigen unteren Ansatz 27 des Leimführungsteils 2, an dessen unterem Ende durch eine sich nach unten und außen erweiternde Ansenkung der Ventilsitz 28 gebildet ist, der mit einem entsprechenden von unten sich gegen den Ventilsitz 28 setzenden, über den Umfang durchgehenden im wesentlichen keramischen Umfangsvorsprung 29 am unteren Ende des Spindelteils 21' zusammenwirkt. Normalerweise wird das Ventilglied 3O durch das Tellerfederpaket 25 hochgedrückt, so daß der Umfangsvorsprung 29 an dem Ventilsitz 28 anliegt und das Leimaustrittsventil 4O geschlossen ist. Erhält jedoch das piezoelektrische Element 2O Spannung, so drückt die Arbeitsfläche 18 das Ventilglied 3O gegen die Kraft des Tellerfederpakets 25 nach unten und den Umfangsvorsprung 29 von dem Ventilsitz 28 weg, so daß ein ringförmiger Austrittsbereich für den Leim geöffnet wird. Die Spindel 21 besitzt am unteren Ende einen Schlitz 47 für einen Schraubendreher. Damit können die axiale Position des Führungsteils 22 und die Vorspannung des Tellerfederpakets 25 justiert werden.

Das piezoelektrische Element 2O ist über Leitungen 51 durch einen Durchbruch 52 der Wandung der Kammer 7 mit einer in Fig. 1 nur angedeuteten Steuereinrichtung 5O verbunden, die eine Gleichspannung in der Größenordnung von 2OO V an das piezoelektrische Element 2O anlegt, wodurch dieses bei der in Betracht kommenden Länge von etwa 4O mm einen Ausdehnungshub von O,1 - O,2 mm erfährt, was eine zum Öffnen des Ventildurchgangs ausreichende Verlagerung des Ventligliedes 3O bedeutet. Der Spannungsverlauf wird von der Steuereinrichtung 5O so gesteuert, daß ein eingeleiteter Spannungsabfall und die damit einhergehende Kontraktion des piezoelektrischen Elements 2O nicht zu schnell erfolgen, damit das Ventilglied 3O bzw. dessen Erweiterung 29 beim Schließen langsam und schonend auf den Ventilsitz aufsetzen.

Auf den buchsenartigen Ansatz 27 ist die eigentliche Austrittsdüse 31 aufgeschraubt, die im unteren Bereich eine Kammer 32 enthält, in die hinein sich die Erweiterung 29 beim Öffnen des Leimaustrittsventils 4O verlagert. Von der Kammer 32 geht ein feiner, in der Achse 11 gelegener Leimaustrittskanal 33 aus, aus dem der Leimstrahl 34 austritt, der auf einem unter der Auftragseinheit 1OO im Sinne des Pfeiles 35 vorbeigeführten Bahn 36 oder einem solchen Zuschnitt eine Leimspur 37 erzeugt (Fig. 1).

Um das untere Ende 21' der Spindel 21, welches ja bei geöffnetem Ventil 4O frei nach unten vorkragt, vor seitlichen Schwingungen zu bewahren, ist eine als Ganzes mit 48 bezeichnete dämpfende Führung vorgesehen, die sich bei der Axialbewegung der Spindel 21 an der Wandung des unteren Teils 17' der Kammer 17 abstützt.

Wird die Spannung von dem piezoelektrischen Element 2O weggenommen, weicht dessen Arbeitsfläche 18 gemäß Fig. 1 nach oben zurück und wird das Ventilglied 3O durch das Tellerfederpaket 25 nach oben verlagert, wodurch sich das Leimaustrittsventil 4O schließt und die Leimspur 37 unterbrochen wird. Vorteilhaft ist, daß sich der Umfangsvorsprung 29 dabei aus der Kammer 32 zurückzieht und den in dem Leimaustrittskanal 33 befindlichen Leim etwas nach oben mitnimmt, so daß der Leim von der Austrittsstelle am unteren Ende des Leimaustrittskanals 33 fortgezogen und ein Nachtropfen verhindert werden.

Im unteren Bereich des Antriebsteils 1 des Gehäuses 1O sind zwei senkrecht zur Zeichen- bzw. Plattenebene der Auftragseinheit 1OO durchgehende Böhrungen 38 vorgesehen, durch die stangenförmige Träger für die Auftragseinheiten hindurchgreifen, auf denen die Auftragseinheiten 1OO dicht nebeneinander oder in wählbaren Abständen angebracht und durch Madenschrauben 39 fixiert werden können.

## Patentansprüche

1. Auftragseinheit zum Auftragen von unter Druck stehendem Leim oder dergleichen auf ein Beleimungsgut,
mit einem Gehäuse (1O),
mit einer in dem Gehäuse (1O) vorgesehenen, eine Achse (11) aufweisenden Ventilkammer (17), in der ein in der Achse (11) gelegener Ventilsitz (28) ausgebildet ist,
mit einem in der Ventilkammer (17) in Richtung der Achse (11) beweglichen Ventilglied (3O), welches mit dem Ventilsitz (28) zur Bildung eines Leimaustrittsventils (4O) zusammenwirkt,
mit einer auf der Austrittsseite des Leimaustrittsventils (4O) angeordneten Austritsdüse (31) für den Leim,
mit einer auf der Eintrittsseite des Leimaustrittsventils (4O) vorgesehenen Zuführung (26,19) für unter Druck stehenden Leim
und mit einem elektrisch betätigten Antrieb, mittels dessen das Ventilglied (3O) in Richtung der Achse (11) bewegbar ist,
dadurch gekennzeichnet,
daß der Antrieb ein piezoelektrisches, an einem Ende in dem Gehäuse (1O) hinterlagertes Element (2O) umfaßt, dessen anderes Ende mit dem Ventilglied (3O) bewegungsverbunden ist,
daß das Gehäuse (1O) in einen Leimführungsteil (2) und einen das piezoelektrische Element (2O) aufnehmenden Antriebsteil (1) unterteilt ist
und daß die Teile (1,2) gegeneinander wärmeisoliert sind.

2. Auftragseinheit nach Anspruch 1, dadurch gekennzeichnet, daß die einander zugewandten Begrenzungsflächen (1',2') des Antriebsteils (1) und des Leimführungsteils (2) im wesentlichen eben sind und einen Abstand (A) voneinander belassen und daß in dem Abstandsraum eine im wesentlichen ebene Wärmeisolationszone (3) vorgesehen ist, durch welche hindurch ein direkter Angriff des piezoelektrischen Elements (20) an dem Ventilglied (30) möglich ist.

3. Auftragseinheit nach Anspruch 2, dadurch gekennzeichnet, daß die Wärmeisolationszone (3) unmittelbar an den Begrenzungsflächen (1',2') angreifende keramische Abstandsstücke umfaßt, die nur einen kleinen Teil der Grundfläche der Wärmeisolationszone (3) einnehmen.

4. Auftragseinheit nach Anspruch 3, dadurch gekennzeichnet, daß die Abstandsstücke als Ringscheiben (13) ausgebildet sind.

5. Auftragseinheit nach Anspruch 4, dadurch gekennzeichnet, daß sich durch mindestens einige der Ringscheiben (13) Verbindungsschrauben (12) hindurcherstrecken, die den Antriebsteil (1) und den Leimführungsteil (2) miteinander verbinden.

6. Auftragseinheit nach Anspruch 2 bis 5, dadurch gekennzeichnet, daß die Wärmeisolationszone (3) ein mindestens einen Teil ihres Grundrisses überdeckendes plattenförmiges Wärmeisolationselement (53) umfaßt.

7. Auftragseinheit nach Anspruch 6, dadurch gekennzeichnet, daß das Wärmeisolationselement (53) eine geringere Dicke als (A) aufweist und auf mindestens einer Seite einen Luftabstand zu der benachbarten Begrenzungsfläche (1',2') beläßt.

8. Auftragseinheit nach Anspruch 7, dadurch gekennzeichnet, daß die Ringscheiben (13) außen eine Höhenstufe (54) aufweisen und daß das plattenförmige Wärmeisolationselement (53) auf den Höhenstufen (54) aufliegt.

9. Auftragseinheit nach einem der Ansprüche 6 bis 8, dadurch gekennzeichnet, daß das plattenförmige Wärmeisolationselement (53) auf mindestens einer Seite eine wärmereflektierende Schicht (55) trägt.

10. Auftragseinheit nach einem der Ansprüche 1 bis 9, dadurch gekennzeichnet, daß das piezoelektrische Element (2O) bei einer Ausdehnung zum Öffnen des Leimaustrittsventils (4O) das Ventilglied (3O) von dem Ventilsitz (28) abhebt und daß Schließmittel vorgesehen sind, mittels deren bei unbetätigtem piezoelektrischen Element (2O) das Ventilglied (3O) in Anlage an dem Ventilsitz (28) haltbar ist.

11. Auftragseinheit nach Anspruche 10, dadurch gekennzeichnet, daß das Ventilglied (3O) einen Umfangsvorsprung (29) aufweist und mit dem Umfangsvorsprung (29) durch die Schließmittel gegen einen das Ventilglied (3O) ringförmig umgebenden Ventilsitz (28) ziehbar ist.

12. Auftragseinheit nach Anspruch 11, dadurch gekennzeichnet, daß das Ventilglied (3O) eine axial verlagerbare Spindel (21) umfaßt, die nahe dem Umfangsvorsprung (29) durch Führungsmittel (48) radial in der Ventilkammer (17') geführt ist.

13. Auftragseinheit nach einem der Ansprüche 1 bis 12, dadurch gekennzeichnet, daß das piezoelektrische Element (2O) blockförmig ausgebildet und in einer mit der Ventilkammer (17) im Grundriß fluchtenden Kammer (7) des Gehäuses (1O) angeordnet ist und daß der Ausdehnungshub des piezoelektrischen Elements (2O) in Bewegungsrichtung des Ventilglieds (3O) verläuft.

14. Auftragseinheit nach Anspruch 13, dadurch gekennzeichnet, daß die Endfläche (18) des piezoelektrischen Elements (2O) unmittelbar am Ende des Ventilglieds (3O) anliegt.

15. Auftragseinheit nach Anspruch 13 oder 14, dadurch gekennzeichnet, daß die andere Endfläche des piezoelektrischen Elements (2O) über eine eine Druckkraft in Richtung auf das Ventilglied (3O) ausübende Federanordnung (9) in der Kammer (7) abgestützt ist.

16. Auftragseinheit nach einem der Ansprüche 1 bis 15, dadurch gekennzeichnet, daß Mittel zur Temperaturkompensation des piezoelektrischen Elements (2O) vorgesehen sind.

17. Auftragseinheit nach Anspruch 16, dadurch gekennzeichnet, daß das piezoelektrische Element (2O) aus mehreren nebeneinander angeordneten Teilelementen (2O',2O'') besteht, von denen nur eines (20') elektrische Spannung erhält, deren Ausdehnungsrichtung einander und zur Verlagerungsrichtung des Ventilgliedes (3O) parallel ist, und die an dem der Endfläche (18) abgelegenen Ende in Ausdehnungsrichtung miteinander verbunden sind, so daß die durch die Temperaturdehnung bedingten Verlagerungen des Endes eines Teilelements (2O',2O'') die eines anderen Teilelements (2O'',2O') gleich sind und das piezoelektrische Element (2O) nach außen nur die spannungsbedingte Ausdehnung des Teilelements (20') zeigt.

18. Auftragseinheit nach Anspruch 17, dadurch gekennzeichnet, daß die Teilelemente (2O',2O'') sich über eine entsprechend geteilte wärmeisolierende Platte (42',42'') an dem Leimführungsteil bzw. an dem Ventilglied (3O) abstützen.

19. Auftragseinheit nach einem der Ansprüche 1 bis 18, dadurch gekennzeichnet, daß eine Einrichtung (5O) zur Steuerung des zeitlichen Verlaufs der an das piezoelektrische Element (2O) während des Ausdehnungshubs angelegten Spannung vorgesehen ist.

20. Auftragseinheit nach einem der Ansprüche 1 bis 19, dadurch gekennzeichnet, daß der Leimführungsteil (2) beheizt ist.

21. Auftragseinheit nach Anspruch 2O, dadurch gekennzeichnet, daß die Beheizung durch eine Heizpatrone erfolgt und das plattenförmige Wärmeisolationselement (53) mindestens den Bereich der Heizpatrone überdeckt.

22. Auftragseinheit nach einem der Ansprüche 1O bis 21, dadurch gekennzeichnet, daß die Schließmittel auf das Ventilglied (3O) eine ständige, in seiner Bewegungsrichtung wirkende elastische Kraft ausüben.

23. Auftragseinheit nach Anspruch 22, dadurch gekennzeichnet, daß die Kraft eine Druckkraft ist.

24. Auftragseinheit nach Anspruch 22 oder 23, dadurch gekennzeichnet, daß die Schließmittel eine Federanordnung umfassen.

25. Auftragseinheit nach Anspruch 24, dadurch gekennzeichnet, daß die Federanordnung durch ein zwischen dem Boden (24) der Ventilkammer (17) und einem Umfangsvorsprung (23) des Ventilgliedes (3O) wirkendes Tellerfederpaket (25) gegeben ist.

26. Auftragseinheit nach Anspruch 22 oder 23, dadurch gekennzeichnet, daß die Schließmittel einen elastomeren Körper umfassen.

27. Auftragseinheit nach Anspruch 22 oder 23, dadurch gekennzeichnet, daß die Schließmittel ein Gasvolumen umfassen.

28. Auftragseinheit nach einem der Ansprüche 1 bis 27, dadurch gekennzeichnet, daß die Auftragseinheit (1OO) eine plattenförmige Gestalt mit einer Dicke (4) von 1O bis 2O mm aufweist, die Austrittsdüse (31) am Rand der Platte gelegen ist und die Austrittsrichtung parallel zur Plattenebene verläuft.

## Claims

1. Applicator unit for applying glue or the like under pressure to a material to be glued, comprising a housing (10), a valve chamber (17) with an axis (11) provided in the housing (10), in which a valve seat (28) is formed along the axis (11), a valve member (30) which is movable in the valve chamber (17) in the direction of the axis (11) and cooperates with the valve seat (28) in order to form a glue discharge valve (40), a discharge nozzle (31) for the glue arranged on the discharge side of the glue discharge valve (40), an inlet (26, 19) for glue under pressure provided on the inlet side of the glue discharge valve (40) and an electrically actuated drive by means of which the valve member (30) can be moved in the direction of the axis (11), characterised in that the drive includes a piezoelectric element (20) mounted at one end in the rear of the housing (10), the other end of which is movably connected to the valve member (30), that the housing (10) is divided into a glue guiding part (2) and a driving part (1) receiving the piezoelectric element (20) and that the parts (1, 2) are thermally insulated relative to one another.

2. Applicator unit according to claim 1, characterised in that the boundary surfaces (1', 2') of the driving part (1) and of the glue guiding part (2) directed towards one another are substantially flat and are at a distance (A) from one another and that a substantially flat thermal insulation zone (3) through which the piezoelectric element (20) can act directly on the valve member (30) is provided in the space.

3. Applicator unit according to claim 2, characterised in that the thermal insulation zone (3) includes ceramic distance pieces which directly engage the boundary surfaces (1', 2') and only take up a small part of the area of the thermal insulation zone (3).

4. Applicator unit according to claim 3, characterised in that the distance pieces are in the form of washers (13).

5. Applicator unit according to claim 4, characterised in that connecting bolts (12) extend through at least some of the washers (13) and connect the driving part (1) and the glue guiding part (2) together.

6. Applicator unit according to claims 2 to 5, characterised in that the thermal insulation zone (3) includes a plate-like thermal insulation element (53) covering at least part of its outline.

7. Applicator unit according to claim 6, characterised in that the thermal insulation element (53) has a thickness less than (A) and there is an air gap between it and the adjacent boundary surface (1', 2') on at least one side.

8. Applicator unit according to claim 7, characterised in that the washers (13) are provided on the exterior with vertical steps (54) and that the plate-like thermal insulation element (53) bears against the vertical steps (54).

9. Applicator unit according to one of claims 6 to 8, characterised in that the plate-like thermal insulation element (53) is provided on at least one side with a heat-reflecting layer (55).

10. Applicator unit according to one of claims 1 to 9, characterised in that the piezoelectric element (20) lifts the valve member (30) from the valve seat (28) in order to open the glue discharge valve (40) in the event of expansion and that closing means are provided, by means of which the valve member (30) can be held against the valve seat (28) when the piezoelectric element (20) is not actuated.

11. Applicator unit according to claim 10, characterised in that the valve member (30) has a circumferential projection (29) via which it can be pulled towards a valve seat (28) surrounding the valve member (30) in an annular manner by the closing means.

12. Applicator unit according to claim 11, characterised in that the valve member (30) includes an axially displaceable spindle (21) which is guided radially in the valve chamber (17') close to the circumferential projection (29) by guide means (48).

13. Applicator unit according to one of claims 1 to 12, characterised in that the piezoelectric element (20) is block-shaped and is arranged in a chamber (7) of the housing (10) aligned in outline with the valve chamber (17) and that the expansion stroke of the piezoelectric element (20) extends in the direction of movement of the valve member (30).

14. Applicator unit according to claim 13, characterised in that the end surface (18) of the piezoelectric element (20) bears directly against the end of the valve member (30).

15. Applicator unit according to claim 13 or claim 14, characterised in that the other end surface of the piezoelectric element (20) is supported in the chamber (7) by means of a spring arrangement (9) exerting a compressive force in the direction of the valve member (30).

16. Applicator unit according to one of claims 1 to 15, characterised by means for temperature compensation of the piezoelectric element (20).

17. Applicator unit according to claim 16, characterised in that the piezoelectric element (20) consists of a plurality of partial elements (20', 20'') arranged one alongside the other, only one (20') of which receives electric voltage, the respective directions of expansion of which are parallel to one another and to the direction of displacement of the valve member (30) and which are connected together in the direction of expansion at the end remote from the end surface (18) so that the displacement of the end of one partial element (20', 20'') as a result of the thermal expansion is identical to that of another partial element (20'', 20') and the piezoelectric element (20) outwardly displays only the expansion of the partial element (20') as a result of the voltage.

18. Applicator unit according to claim 17, characterised in that the partial elements (20', 20'') are supported on the glue guiding part or on the valve member (30) by means of a correspondingly divided heat-insulating plate (42', 42'').

19. Applicator unit according to one of claims 1 to 18, characterised by a means (50) for controlling the variation in the voltage applied to the piezoelectric element (20) during the expansion stroke with time.

20. Applicator unit according to one of claims 1 to 19, characterised in that the glue guiding part (2) is heated.

21. Applicator unit according to claim 20, characterised in that heating is effected by a cartridge-type heater and the plate-like thermal insulation element (53) covers at least the region of the cartridge-type heater.

22. Applicator unit according to one of claims 10 to 21, characterised in that the closing means exert a constant elastic force on the valve member (30), acting in the direction of movement thereof.

23. Applicator unit according to claim 22, characterised in that the force is a compressive force.

24. Applicator unit according to claim 22 or claim 23, characterised in that the closing means include a spring arrangement.

25. Applicator unit according to claim 24, characterised in that the spring arrangement is formed by a disc spring assembly (25) acting between the bottom (24) of the valve chamber (17) and a circumferential projection (29) of the valve member (30).

26. Applicator unit according to claim 22 or claim 23, characterised in that the closing means include an elastomeric body.

27. Applicator unit according to claim 22 or claim 23, characterised in that the closing means include a gas volume.

28. Applicator unit according to one of claims 1 to 27, characterised in that the applicator unit (100) has a plate-like shape with a thickness (4) of 10 to 20 mm, the discharge nozzle (31) is situated at the edge of the plate and the direction of discharge extends parallel to the plane of the plate.

## Revendications

1. Module d'application pour l'application de colle sous pression ou analogue sur une matière à encoller,
comprenant une enveloppe (10),
une chambre de soupape (17) prévue dans l'enveloppe (10), comportant un axe (11) et dans laquelle un siège de soupape (28) placé dans l'axe (11) est réalisé,
un organe de soupape (30) mobile dans la chambre de soupape (17) dans la direction de l'axe (11) et qui coopère avec le siège de soupape (28) pour former une soupape (40) de sortie de colle,
une buse (31) de sortie de la colle disposée sur le côté de la sortie de la soupape (40) de sortie de colle,
une arrivée (26, 19) de colle sous pression qui est prévue sur le côté d'entrée de la soupape (40) de sortie de colle
ainsi qu'une commande manoeuvrée électriquement et à l'aide de laquelle l'organe de soupape (30) est déplaçable dans la direction de l'axe (11),
caractérisé
en ce que la commande comprend un élément piézoélectrique (20) dont une extrémité est logée dans l'enveloppe (10) et dont l'autre extrémité est reliée à l'organe de soupape (30) pour en provoquer les mouvements,
en ce que l'enveloppe (10) est subdivisée en une partie (2) dans laquelle la colle passe et une partie de commande (1) logeant l'élément piézoélectrique (20)
et en ce que les parties (1, 2) sont isolées thermiquement l'une de l'autre.

2. Module d'application selon la revendication 1, caractérisé en ce que les surfaces de délimitation (1', 2'), tournées l'une vers l'autre, de la partie de commande (1) et de la partie (2) dans laquelle passe la colle sont sensiblement planes et laissent subsister entre elles une distance d'intervalle (A) et en ce qu'une zone d'isolation thermique sensiblement plane (3), à travers laquelle une attaque directe de l'organe de soupape (30) par l'élément piézoélectrique (20) est possible, est prévue dans l'intervalle.

3. Module d'application selon la revendication 2, caractérisé en ce que la zone d'isolation thermique (3) comprend des entretoises de céramique qui attaquent directement les surfaces de délimitation (1', 2') et qui n'occupent qu'une faible partie de la surface de base de la zone d'isolation thermique (3).

4. Module d'application selon la revendication 3, caractérisé en ce que les entretoises sont conformées en disques annulaires (13).

5. Module d'application selon la revendication 4, caractérisé en ce que des vis d'assemblage (12) qui passent à travers au moins certains des disques annulaires (13) assemblent la partie de commande (1) et la partie (2) par laquelle la colle passe.

6. Module d'application selon les revendications 2 à 5, caractérisé en ce que la zone d'isolation thermique (3) comprend un élément d'isolation thermique en forme de plaque (53) qui recouvre au moins une partie de sa surface en projection horizontale.

7. Module d'application selon la revendication 6, caractérisé en ce que l'élément d'isolation thermique (53) a une épaisseur inférieure à (A) et laisse subsister au moins sur un côté un interstice avec la zone voisine de délimitation (1', 2').

8. Module d'application selon la revendication 7, caractérisé en ce que les disques annulaires (13) présentent extérieurement un étagement en hauteur (54) et en ce que l'élément d'isolation thermique en forme de plaque (53) repose sur les étagements en hauteur (54).

9. Module d'application selon l'une des revendications 6 à 8, caractérisé en ce que l'élément d'isolation thermique en forme de plaque (53) comporte au moins sur un côté une couche (55) qui réfléchit la chaleur.

10. Module d'application selon l'une des revendications 1 à 9, caractérisé en ce que l'élément piézoélectrique (20) soulève l'organe de soupape (30) en l'écartant du siège de soupape (28) lorsqu'il subit un allongement pour l'ouverture de la soupape de sortie de colle (40) et en ce que des organes de fermeture qui sont prévus sont destinés à tenir l'organe de soupape (30) en appui contre le siège de soupape (28) lorsque l'élément piézoélectrique (20) n'est pas actionné.

11. Module d'application selon la revendication 10, caractérisé en ce que l'organe de soupape (30) comporte une protubérance circonférentielle (29) et peut être tiré au moyen de la protubérance circonférentielle (29) par les organes de fermeture contre le siège de soupape (28) qui entoure en anneau l'organe de soupape (30).

12. Module d'application selon la revendication 11, caractérisé en ce que l'organe de soupape (30) comprend une tige (21) déplaçable axialement et guidée radialement à proximité de la protubérance circonférentielle (29) dans la chambre de soupape (17') par des organes de guidage (48).

13. Module d'application selon l'une des revendications 1 à 12, caractérisé en ce que l'élément piézoélectrique (20) est réalisé sous forme d'un bloc et disposé dans une chambre (7) de l'enveloppe (10) qui est à l'alignement de la chambre de soupape (17) en vue en projection horizontale et en ce que la course d'allongement de l'élément piézoélectrique (20) est orientée dans la direction du mouvement de l'organe de soupape (30).

14. Module d'application selon la revendication 13, caractérisé en ce que la surface extrême (18) de l'élément piézoélectrique (20) est en appui directement contre l'extrémité de l'organe de soupape (30).

15. Module d'application selon la revendication 13 ou 14, caractérisé en ce que l'autre surface extrême de l'élément piézoélectrique (20) prend appui dans la chambre (7) sur un système à ressort (9) exerçant une force de poussée vers l'organe de soupape (30).

16. Module d'application selon l'une des revendications 1 à 15, caractérisé en ce que des moyens de compensation de la température de l'élément piézoélectrique (20) sont prévus.

17. Module d'application selon la revendication 16, caractérisé en ce que l'élément piézoélectrique (20) se compose de plusieurs éléments partiels juxtaposés (20', 20'') dont un seul (20') reçoit une tension électrique et dont la direction de leurs allongements respectifs est parallèle ainsi que parallèle à la direction de déplacement de l'organe de soupape (30), lesdits éléments partiels étant reliés les uns aux autres dans la direction d'allongement à l'extrémité tournée à l'opposé de la surface extrême (18), de sorte que les déplacements de l'extrémité d'un élément partiel (20', 20'') qui sont provoqués par la dilatation thermique sont égaux à ceux d'un autre élément partiel (20'', 20') et l'élément piézoélectrique (20) ne présente vis à vis de l'extérieur que l'allongement de l'élément partiel (20') qui est dû à la tension.

18. Module d'application selon la revendication 17, caractérisé en ce que les éléments partiels (20', 20'') prennent appui par l'intermédiaire d'une plaque thermiquement isolante (42', 42''), qui est subdivisée de manière correspondante, contre la partie par laquelle la colle passe et contre l'organe de soupape (30).

19. Module d'application selon l'une des revendications 1 à 18, caractérisé en ce qu'un dispositif (50) de commande de la variation dans le temps de la tension appliquée à l'élément piézoélectrique (20) pendant la course d'allongement est prévu.

20. Module d'application selon l'une des revendications 1 à 19, caractérisé en ce que la partie (2) par laquelle la colle passe est chauffée.

21. Module d'application selon la revendication 20, caractérisé en ce que le chauffage est produit par une cartouche chauffante et l'élément d'isolation thermique en forme de plaque (53) recouvre au moins la zone de la cartouche chauffante.

22. Module d'application selon l'une des revendications 10 à 21, caractérisé en ce que les organes de fermeture exercent sur l'organe de soupape (30) une force élastique constante agissant dans la direction de son déplacement.

23. Module d'application selon la revendication 22, caractérisé en ce que la force est une force de compression.

24. Module d'application selon la revendication 22 ou 23, caractérisé en ce que les organes de fermeture comprennent un système à ressort.

25. Module d'application selon la revendication 24, caractérisé en ce que le système à ressort est constitué d'un empilement de ressorts Belleville (25) agissant entre le fond (24) de la chambre (17) de la soupape et une protubérance circonférentielle (23) de l'organe de soupape (30).

26. Module d'application selon la revendication 22 ou 23, caractérisé en ce que les organes de fermeture comprennent un corps en élastomère.

27. Module d'application selon la revendication 22 ou 23, caractérisé en ce que les organes de fermeture comprennent un volume de gaz.

28. Module d'application selon l'une des revendications 1 à 27, caractérisé en ce que le module d'application (100) a une conformation en forme de plaque ayant une épaisseur (4) de 10 à 20 mm, la buse de sortie (31) est placée sur le bord de la plaque et la direction de sortie est parallèle au plan de la plaque.
